# DEMANDE DE BREVET EUROPEEN

(11) **EP 3 756 749 A1**
(43) Date de publication de la demande: **30.12.2020**
(21) Numéro de dépôt: 20180080.2
(22) Date de dépôt: 15.06.2020
(51) Int. Cl.: B01D 53/04, B01D 53/047, B01D 53/22, C10L 3/10

(54) **TRAITEMENT D'UN FLUX DE MÉTHANE COMPRENANT DES COV ET DU DIOXYDE DE CARBONE PAR COMBINAISON D'UNE UNITÉ D'ADSORPTION ET D'UNE UNITÉ DE SÉPARATION PAR MEMBRANE**

(30) Priorité: 20.06.2019 FR 1906644
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: BARRAUD, François, 38360 Sassenage (FR); CHAREYRE, Jean-Marc, 38360 Sassenage (FR)
(74) Mandataire: Air Liquide

(57) **Abrégé**

Installation pour le traitement d'un flux gazeux d'alimentation (1) comprenant au moins du méthane, du dioxyde de carbone et des composés organiques volatiles (COV), pour produire un flux gazeux enrichi en méthane comprenant dans le sens de circulation du flux gazeux d'alimentation :
a) au moins un compresseur (2) permettant d'augmenter la pression du flux gazeux d'alimentation à une pression comprise entre 8 et 15 barg,
b) au moins une unité d'adsorption comprenant au moins trois adsorbeurs A1, A2 et A3 qui suivent chacun en décalage de phase un cycle de pression et qui contiennent un adsorbant permettant d'éliminer au moins une partie des COV,
c) au moins une unité de séparation par membrane (6) permettant de recevoir le flux gazeux (5) sortant des adsorbeurs et de produire un perméat (8) enrichi en dioxyde de carbone et un rétentat enrichi (7) en méthane,
d) un moyen de mesure de la pression du flux gazeux entrant dans l'unité de séparation par membrane et/ou un moyen de mesure de la concentration en méthane dans ce même flux et/ou un moyen de mesure de la pression dans chacun des adsorbeurs,
e) un moyen de comparaison de la mesure prise avec une valeur cible, et
f) un moyen d'ajustement de l'écoulement du flux gazeux d'alimentation.

## Description

La présente invention est relative à une installation et un procédé pour le traitement d'un flux gazeux d'alimentation comprenant au moins du méthane, du dioxyde de carbone et des composés organiques volatiles (COV), pour produire un flux gazeux enrichi en méthane. Elle concerne en particulier l'épuration de biogaz, dans le but de produire du biométhane conforme aux spécifications pour injection dans un réseau de gaz naturel.

Le biogaz est le gaz produit lors de la dégradation de matières organiques en l'absence d'oxygène (fermentation anaérobie) encore appelée méthanisation. Il peut s'agir d'une dégradation naturelle - on l'observe ainsi dans les marais ou les décharges d'ordures ménagères - mais la production de biogaz peut aussi résulter de la méthanisation de déchets dans un réacteur dédié, appelé méthaniseur ou digesteur.

De par ses constituants principaux - méthane et dioxyde de carbone - le biogaz est un puissant gaz à effet de serre ; il constitue aussi, parallèlement, une source d'énergie renouvelable appréciable dans un contexte de raréfaction des énergies fossiles.

Le biogaz contient majoritairement du méthane (CH4) et du dioxyde de carbone (CO2) dans des proportions variables en fonction du mode d'obtention mais également, en moindres proportions de l'eau, de l'azote, de l'hydrogène sulfuré, de l'oxygène, ainsi que des composés organiques autres, à l'état de traces.

Selon les matières organiques dégradées et les techniques utilisées, les proportions des composants diffèrent, mais en moyenne le biogaz comporte, sur gaz sec, de 30 à 75% de méthane, de 15 à 60% de CO2, de 0 à 15% d'azote, de 0 à 5% d'oxygène et des composés traces.

Le biogaz est valorisé de différentes manières. Il peut, après un traitement léger, être valorisé à proximité du site de production pour fournir de la chaleur, de l'électricité ou un mélange des deux (la cogénération); la teneur importante en dioxyde de carbone réduit son pouvoir calorifique, augmente les coûts de compression et de transport et limite l'intérêt économique de sa valorisation à cette utilisation de proximité.

Une purification plus poussée du biogaz permet sa plus large utilisation, en particulier, une purification poussée du biogaz permet d'obtenir un biogaz épuré aux spécifications du gaz naturel et qui pourra lui être substitué ; le biogaz ainsi purifié est le « biométhane ». Le biométhane complète ainsi les ressources de gaz naturel avec une partie renouvelable produite au cœur des territoires; il est utilisable pour exactement les mêmes usages que le gaz naturel d'origine fossile. Il peut alimenter un réseau de gaz naturel, une station de remplissage pour véhicules, il peut aussi être liquéfié pour être stocké sous forme de gaz naturel liquide (GNL)...

Les modes de valorisation du biométhane sont déterminés en fonction des contextes locaux : besoins énergétiques locaux, possibilités de valorisation en tant que biométhane carburant, existence à proximité de réseaux de distribution ou de transport de gaz naturel notamment. Créant des synergies entre les différents acteurs œuvrant sur un territoire (agriculteurs, industriels, pouvoirs publics), la production de biométhane aide les territoires à acquérir une plus grande autonomie énergétique.

Plusieurs étapes doivent être franchies entre la collecte du biogaz et l'obtention du biométhane, produit final apte à être comprimé ou liquéfié.

En particulier, plusieurs étapes sont nécessaires avant le traitement qui vise à séparer le dioxyde de carbone pour produire un courant de méthane purifié. Une première étape consiste à comprimer le biogaz qui a été produit et acheminé à pression atmosphérique, cette compression peut être obtenue - de façon classique - via un compresseur à vis lubrifiée. Les étapes suivantes visent à débarrasser le biogaz des composants corrosifs que sont le sulfure d'hydrogène et les composés organiques volatils (COV), les technologies utilisées sont de façon classique l'adsorption à pression modulée (PSA) et le piégeage sur charbon actif. Vient ensuite l'étape qui consiste à séparer le dioxyde de carbone pour disposer in fine de méthane à la pureté requise pour son usage ultérieur.

Le dioxyde de carbone est un contaminant typiquement présent dans le gaz naturel dont il est courant de devoir le débarrasser. Des technologies variées sont utilisées pour cela en fonction des situations; parmi celles-ci, la technologie membranaire est particulièrement performante lorsque la teneur en CO2 est élevée ; elle est donc particulièrement performante pour séparer le CO2 présent dans le biogaz, et en particulier dans le gaz de décharge.

Les procédés membranaires de séparation de gaz utilisés pour la purification d'un gaz, qu'ils utilisent un ou plusieurs étages de membranes doivent permettre la production d'un gaz à la qualité requise, pour un faible coût, tout en minimisant les pertes du gaz que l'on souhaite valoriser. Ainsi, dans le cas de l'épuration du biogaz, la séparation effectuée est principalement une séparation CH4/CO2, devant permettre la production d'un gaz contenant en fonction de son utilisation plus de 85% de CH4, de préférence plus de 95% de CO2, plus préférentiellement plus de 97,5% de CH4, tout en minimisant les pertes de CH4 dans le gaz résiduaire et le coût d'épuration, ce dernier étant pour une part importante lié à la consommation électrique du dispositif de compression du gaz en amont des membranes.

Il est préférable que les installations permettant la production d'un flux gazeux enrichi en méthane puissent contrôler la perte de méthane.

Partant de là, un problème qui se pose est de fournir une installation permettant l'obtention d'un courant de méthane à concentration constante.

Une solution de la présente invention est une installation pour le traitement d'un flux gazeux d'alimentation 1 comprenant au moins du méthane, du dioxyde de carbone et des composés organiques volatiles (COV), pour produire un flux gazeux enrichi en méthane comprenant dans le sens de circulation du flux gazeux d'alimentation :
a) au moins un compresseur 2 permettant d'augmenter la pression du flux gazeux d'alimentation à une pression comprise entre 8 et 15 barg,
b) au moins une unité d'adsorption comprenant au moins trois adsorbeurs A1, A2 et A3 qui suivent chacun en décalage de phase un cycle de pression et qui contiennent un adsorbant permettant d'éliminer au moins une partie des COV,
c) au moins une unité de séparation par membrane 6 permettant de recevoir le flux gazeux 5 sortant des adsorbeurs et de produire un perméat 8 enrichi en dioxyde de carbone et un rétentat enrichi 7 en méthane,
d) un moyen de mesure de la pression du flux gazeux entrant dans l'unité de séparation par membrane et/ou un moyen de mesure de la concentration en méthane dans ce même flux et/ou un moyen de mesure de la pression dans chacun des adsorbeurs,
e) un moyen de comparaison de la mesure prise avec une valeur cible, et
f) un moyen d'ajustement de l'écoulement du flux gazeux d'alimentation.

De préférence l'unité d'adsorption sera de type PSA.

Selon le cas, l'installation selon l'invention peut présenter une ou plusieurs des caractéristiques suivantes :
- elle comprend au moins un jeu de vannes 3 en entrée des adsorbeurs et un jeu de vannes 4 en sortie des adsorbeurs et ces jeux de vannes constituent au moins une partie du moyen d'ajustement de l'écoulement du flux gazeux d'alimentation.
- elle comprend un moyen de recycle d'au moins une partie du perméat dans au moins un des adsorbeurs.
- elle comprend un moyen de contournement du moyen de recycle.
- l'unité de séparation par membrane comprend : une première sous-unité de séparation par membrane permettant de recevoir le flux gazeux sortant des adsorbeurs et de produire un premier perméat enrichi en dioxyde de carbone et un premier rétentat enrichi en méthane, une seconde sous-unité de séparation par membrane permettant de recevoir le premier rétentat et de produire un second perméat enrichi en dioxyde de carbone et un second rétentat enrichi en méthane, une troisième sous-unité de séparation par membrane permettant de recevoir le premier perméat et de produire un troisième rétentat (9) enrichi en méthane et un troisième perméat enrichi en CO2.

La présente invention a également pour objet un procédé de traitement d'un flux gazeux d'alimentation comprenant au moins du méthane, du dioxyde de carbone et des composés organiques volatiles (COV), pour produire un flux gazeux enrichi en méthane, mettant en œuvre une installation selon l'invention et comprenant :
i. une étape de compression du flux gazeux d'alimentation à une pression comprise entre 8 et 15 barg
ii. une étape d'élimination d'au moins une partie des COV par adsorption du flux gazeux comprimé dans l'unité d'adsorption,
iii. une étape de séparation du dioxyde de carbone et du méthane dans l'unité de séparation par membrane,
iv. une étape de mesure de la pression du flux gazeux entrant dans l'unité de séparation par membrane et/ou de mesure de la concentration en méthane dans ce même flux et/ou de mesure de la pression dans chacun des adsorbeurs,
v. une étape de comparaison de la mesure prise à l'étape iv avec une valeur cible, et
vi. en cas d'écart entre la mesure prise et la valeur cible une étape de modification de l'écoulement du flux gazeux d'alimentation afin d'obtenir la valeur cible.

Notons que les étapes iv à vi permettent d'obtenir un flux de méthane à concentration constante.

Selon le cas le procédé peut présenter un ou plusieurs des caractéristiques suivantes :
- les étapes i à vi sont réalisées en continu,
- à l'étape ii chaque adsorbeur de l'unité d'adsorption va suivre en décalage de phase le cycle de pression comprenant les périodes successives suivantes :
   a. adsorption au cours de laquelle le gaz d'alimentation est introduit par une des extrémités de l'adsorbeur et au moins une partie des COV sont adsorbés par l'adsorbant,
   b. dépressurisation au cours de laquelle l'adsorbeur qui n'est plus alimenté en gaz d'alimentation est évacué par au moins une de ses extrémités d'une partie des COV contenus dans l'adsorbant,
   c. élution au cours de laquelle un gaz de purge circule à travers le lit d'adsorbant afin d'aider à la désorption des COV,
   d. repressurisation au cours de laquelle l'adsorbeur est au moins partiellement repressurisé.
- à l'étape c. le gaz de purge est constitué d'au moins une partie du perméat enrichi en dioxyde de carbone issu de l'unité de séparation par membrane,
- le gaz de purge sortant de l'unité d'adsorption est brûlé dans un oxidateur thermique à pression atmosphérique ou est envoyé à l'évent de l'installation.
- le perméat enrichi en dioxyde de carbone est envoyé directement à l'évent ou dans un oxidateur thermique lors des périodes pendant lesquelles aucun adsorbeur n'est traversé par ledit perméat.
- le cycle de pression comprend une étape de temps mort.
- la dépressurisation commence par une dépressurisation à co-courant par équilibrage de pressions avec un autre adsorbeur.
- les étapes iv, v et vi sont réalisées automatiquement par des moyens de transmission de données et de traitement de données.
- le flux gazeux d'alimentation est du biogaz.

De manière générale, un procédé par adsorption en phase gazeuse permet de séparer une ou plusieurs molécules d'un mélange gazeux les contenant, en exploitant la différence d'affinité d'un ou plusieurs adsorbants pour les différentes molécules constitutives du mélange. L'affinité d'un adsorbant pour une molécule dépend d'une part de la structure et la composition de l'adsorbant et d'autre part des propriétés de la molécule, en particulier sa taille, sa structure électronique et ses moments multipolaires. Un adsorbant peut être par exemple une zéolite, un charbon actif, une alumine activée éventuellement dopée, un gel de silice, un tamis moléculaire carboné, une structure métallo-organique, un oxyde ou hydroxyde de métaux alcalins ou alcalino-terreux, ou une structure poreuse contenant de préférence une substance capable de réagir réversiblement avec les molécules, substance telle que amines, solvants physique, complexants métalliques, oxydes ou hydroxydes métalliques par exemple.

Les matériaux adsorbants les plus classiques sont sous forme de particules (billes, bâtonnets, concassés...) mais existent également sous forme structurée tels les monolithes, roues, contacteurs à passages parallèle, tissus, fibres...

On peut distinguer 3 grandes familles de procédé par adsorption : les procédés à charge perdue, les procédés TSA (Température Swing Adsorption = Adsorption à variation de pression) et enfin les procédés PSA (Pressure Swing Adsorption = Adsorption à variation de pression).

Dans les procédés à charge perdue - on parle souvent dans ce cas de lit de garde- on met en place une nouvelle charge lorsque celle en cours d'utilisation est saturée par les impuretés ou plus généralement quand elle ne peut plus jouer son rôle de protection de manière suffisante.

Dans les procédés de type TSA, l'adsorbant en fin d'utilisation est régénéré in situ, c'est-à-dire que les impuretés arrêtées sont évacuées afin que le dit adsorbant récupère l'essentiel de ses capacités d'adsorption et puisse recommencer un cycle d'épuration, l'effet de régénération essentiel étant dû à une élévation de température.

Enfin, dans les procédés de type PSA, l'adsorbant en fin de phase de production est régénéré par la désorption des impuretés obtenue au moyen d'une baisse de leur pression partielle. Cette baisse de pression peut être obtenue par une baisse de la pression totale et/ ou par balayage avec un gaz exempt ou contenant peu d'impuretés.

On s'intéresse ici à ce dernier type de procédé par PSA.

Dans le cadre de la présente invention, on désigne par les termes PSA tout procédé d'épuration ou de séparation de gaz mettant en œuvre une variation cyclique de la pression que voit l'adsorbant entre une pression haute, dite pression d'adsorption, et une pression basse, dite pression de régénération. Ainsi, cette appellation générique de PSA est employée indifféremment pour désigner les procédés cycliques suivants, auxquels il est aussi courant de donner des noms plus spécifiques en fonction des niveaux de pression mis en jeu ou du temps nécessaire à un adsorbeur pour revenir à son point initial (temps de cycle):
- Les procédés VSA dans lesquels l'adsorption s'effectue sensiblement à la pression atmosphérique, préférentiellement entre 0.95 et 1.25 bar abs et la pression de désorption est inférieure à la pression atmosphérique, typiquement de 50 à 400 mbar abs
- Les procédés MPSA ou VPSA dans lesquels l'adsorption s'effectue à une pression haute supérieure à la pression atmosphérique, typiquement entre 1.4 et 6 bar abs, et la désorption à une pression basse inférieure à la pression atmosphérique, généralement comprise entre 200 et 600 mbar abs
- Les procédés PSA proprement dits dans lesquels la pression haute est sensiblement supérieure à la pression atmosphérique, typiquement entre 3 et 50 bar abs et la pression basse sensiblement égale ou supérieure à la pression atmosphérique, généralement entre 1 et 9 bar abs.
- Les procédés RPSA (Rapid PSA) pour lesquels la durée du cycle de pression est typiquement inférieure à la minute
- Les procédés URPSA (Ultra Rapid PSA) pour lesquels la durée du cycle de pression est de l'ordre de quelques secondes maximum.

Il convient de noter que ces diverses appellations ne sont pas standardisées et que les limites sont sujettes à variation. On rappelle que sauf avis contraire, l'utilisation du terme PSA recouvre ici toutes ces variantes.

Un adsorbeur va donc commencer une période d'adsorption jusqu'à ce qu'il soit chargé dans le ou les constituants à arrêter à la pression haute puis va être régénéré par dépressurisation et extraction des composés adsorbés avant d'être remis en état pour recommencer une nouvelle période d'adsorption. L'adsorbeur a alors effectué un "cycle de pression" et le principe même du procédé PSA est d'enchaîner ces cycles les uns après les autres ; il s'agit donc d'un procédé cyclique. Le temps que met un adsorbeur pour revenir dans son état initial est appelé temps de cycle. Par principe, chaque adsorbeur suit le même cycle avec un décalage temporel qu'on appelle temps de phase ou plus simplement phase. On a donc la relation : $Temps de phase = temps de cycle / Nombre d ′ adsorbeurs$ et on voit que le nombre de phases est égal au nombre d'adsorbeurs.

Ce cycle comporte donc généralement des périodes de :
- Production ou Adsorption au cours de laquelle le gaz d'alimentation est introduit par une des extrémités de l'adsorbeur, les composés les plus adsorbables sont adsorbés préférentiellement et le gaz enrichi en les composés les moins adsorbables (gaz produit) est extrait par la seconde extrémité. L'adsorption peut se faire à pression montante, à pression sensiblement constante, voire à pression légèrement descendante. On parle de pression HP (haute pression) pour signifier la pression d'adsorption.
- Dépressurisation au cours de laquelle l'adsorbeur qui n'est plus alimenté en gaz d'alimentation est évacué par au moins une de ses extrémités d'une partie des composés contenus dans l'adsorbant et les volumes libres. En prenant comme référence le sens de circulation du fluide en période d'adsorption, on peut définir des dépressurisations à co-courant, à contre-courant ou simultanément à co et contre-courant.
- Elution ou Purge au cours de laquelle un gaz enrichi en les constituants les moins adsorbables (gaz de purge) circule à travers le lit d'adsorbant afin d'aider à la désorption des composés les plus adsorbables. La Purge se fait généralement à contre-courant.
- Repressurisation au cours de laquelle l'adsorbeur est au moins partiellement repressurisé avant de reprendre une période d'Adsorption. La repressurisation peut se faire à contre-courant et/ou à co-courant.
- Temps mort au cours de laquelle l'adsorbeur reste dans le même état. Ces temps morts peuvent faire partie intégrale du cycle, permettant la synchronisation d'étapes entre adsorbeurs ou faire partie d'une étape qui s'est terminée avant le temps imparti. Les vannes peuvent être fermées ou rester en l'état selon les caractéristiques du cycle.

Lorsque le produit valorisé est constitué par les constituants les plus adsorbables, on peut ajouter une étape dite de Rinse qui consiste à faire circuler à co-courant dans l'adsorbeur un gaz enrichi en les constituants les plus adsorbables avec l'objectif de chasser de l'adsorbant et des volumes morts les composés les moins adsorbables. Cette étape de Rinse peut se faire à toute pression entre la pression haute et la pression basse et utilise généralement une fraction du produit basse pression après compression. Le gaz extrait de l'adsorbeur lors de cette étape peut avoir de nombreuses utilisations (production secondaire de gaz enrichi en les constituants les moins adsorbables, repressurisation, élution, réseau fuel gas...).

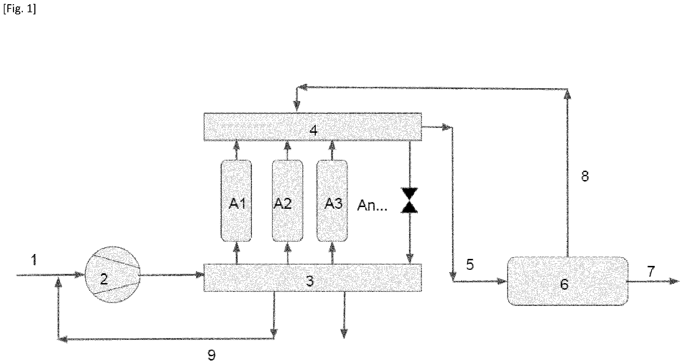

Le procédé selon l'invention va être illustré à l'aide de la [Fig. 1]. Le flux gazeux d'alimentation 1 comprenant au moins du méthane, du dioxyde de carbone et des composés organiques volatiles (COV) est comprimé dans le compresseur 2 à une pression comprise entre 8 et 15 barg. Puis par l'intermédiaire d'un premier ensemble de vannes 3 le flux gazeux comprimé est introduit successivement selon le cycle de pression mentionné ci-dessus dans les adsorbeurs A1, A2 et A3. Ces trois adsorbeurs comprenant au moins un adsorbant permettant d'éliminer au moins une partie des COV, les COV sont éliminés au moins en partie du flux gazeux. On récupère en sortie des adsorbeurs par l'intermédiaire d'un deuxième ensemble de vannes 4 un flux gazeux 5 enrichi en méthane et dioxyde de carbone. Le méthane et le dioxyde de carbone du flux gazeux 5 sont séparés dans l'unité de séparation membranaire 6. Ainsi on récupère en sortie de l'unité de séparation membranaire 6 un rétentat 7 riche en méthane et un perméat 8 riche en dioxyde de carbone. Le perméat 8 riche en dioxyde de carbone est recyclé comme gaz de purge dans les adsorbeurs A1, A2 et A3 par l'intermédiaire du deuxième ensemble de vannes 4. Lors des périodes pendant lesquelles aucun adsorbeur n'est traversé par ledit perméat 8, ledit perméat 8 contourne les adsorbeurs via une vanne Bypass. Le perméat 8 est alors envoyé directement à l'évent ou dans un oxidateur thermique. Pour les périodes où le perméat 8 est recyclé comme gaz de purge dans les adsorbeurs, le perméat sortant de l'unité d'adsorption est brûlé dans un oxidateur thermique à pression atmosphérique ou est envoyé à l'évent de l'installation. Une autre possibilité est lorsque les gaz de purge ne sont pas utilisés pour régénérer les adsorbants, ils sont recyclé en amont du compresseur 9.

Selon un cas particulier, le flux gazeux d'alimentation comprend :
- de l'eau,
- des composés organiques tels que les mercaptans, les sulfites et les tiophènes
- des COS et/ou H2S, et
- des composants BTEX (Benzène, Toluène, Éthylbenzène et Xylènes) et ou hydrocarbure CnHm lourds.

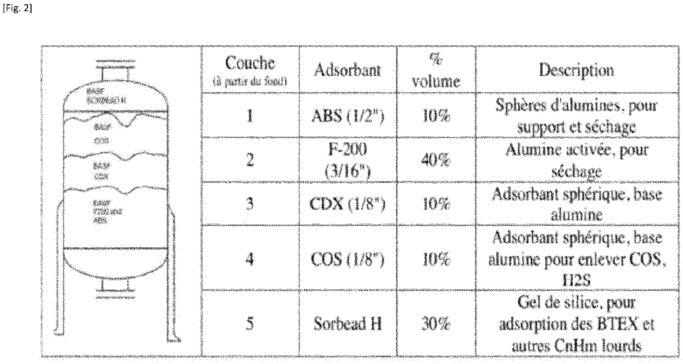

Dans ce cas particulier, les adsorbeurs A1, A2, et A3 comprennent cinq couches d'adsorbants : première couche d'adsorbant servant au support des adsorbants suivant, deuxième couche d'alumine activée pour sécher le flux gazeux, la troisième couche d'alumine activée pour fixer les composés organiques tels que mercaptans, sulfites, tiophènes, quatrième couche d'adsorbants pour enlever les COS et H2S, cinquième couche servant à fixer les composants BTEX et hydrocarbure CnHm lourds. La [Fig. 2] donne un exemple d'adsorbeur comprenant ces cin couches d'adsorbants.

## Revendications

1. Installation pour le traitement d'un flux gazeux d'alimentation (1) comprenant au moins du méthane, du dioxyde de carbone et des composés organiques volatiles (COV), pour produire un flux gazeux enrichi en méthane comprenant dans le sens de circulation du flux gazeux d'alimentation :
a) au moins un compresseur (2) permettant d'augmenter la pression du flux gazeux d'alimentation à une pression comprise entre 8 et 15 barg,
b) au moins une unité d'adsorption comprenant au moins trois adsorbeurs A1, A2 et A3 qui suivent chacun en décalage de phase un cycle de pression et qui contiennent un adsorbant permettant d'éliminer au moins une partie des COV du flux gazeux comprimé,
c) au moins une unité de séparation par membrane (6) permettant de recevoir le flux gazeux (5) sortant des adsorbeurs et de produire un perméat (8) enrichi en dioxyde de carbone et un rétentat enrichi (7) en méthane,
d) un moyen de mesure de la pression du flux gazeux entrant dans l'unité de séparation par membrane et/ou un moyen de mesure de la concentration en méthane dans ce même flux et/ou un moyen de mesure de la pression dans chacun des adsorbeurs,
e) un moyen de comparaison de la mesure prise avec une valeur cible, et
f) un moyen d'ajustement de l'écoulement du flux gazeux d'alimentation.

2. Installation selon la revendication 1, **caractérisée en ce qu'**elle comprend au moins un jeu de vannes (3) en entrée des adsorbeurs et un jeu de vannes (4) en sortie des adsorbeurs et ces jeux de vannes constituent au moins une partie du moyen d'ajustement de l'écoulement du flux gazeux d'alimentation.

3. Installation selon l'une des revendications 1 ou 2, **caractérisée en ce qu'**elle comprend un moyen de recycle d'au moins une partie du perméat dans au moins un des adsorbeurs.

4. Installation selon la revendication 3, **caractérisée en ce qu'**elle comprend un moyen de contournement du moyen de recycle.

5. Installation selon l'une des revendications 1 à 4, **caractérisée en ce que** l'unité de séparation par membrane comprend :
- une première sous-unité de séparation par membrane permettant de recevoir le flux gazeux sortant des adsorbeurs et de produire un premier perméat enrichi en dioxyde de carbone et un premier rétentat enrichi en méthane,
- une seconde sous-unité de séparation par membrane permettant de recevoir le premier rétentat et de produire un second perméat enrichi en dioxyde de carbone et un second rétentat enrichi en méthane,
- une troisième sous-unité de séparation par membrane permettant de recevoir le premier perméat et de produire un troisième rétentat (9) enrichi en méthane et un troisième perméat enrichi en CO2.

6. Procédé de traitement d'un flux gazeux d'alimentation comprenant au moins du méthane, du dioxyde de carbone et des composés organiques volatiles (COV), pour produire un flux gazeux enrichi en méthane, mettant en œuvre une installation telle que définie dans l'une des revendications 1 à 5 et comprenant :
i. Une étape de compression du flux gazeux d'alimentation à une pression comprise entre 8 et 15 barg
ii. Une étape d'élimination d'au moins une partie des COV par adsorption du flux gazeux comprimé dans l'unité d'adsorption,
iii. Une étape de séparation du dioxyde de carbone et du méthane dans l'unité de séparation par membrane,
iv. Une étape de mesure de la pression du flux gazeux entrant dans l'unité de séparation par membrane et/ou de mesure de la concentration en méthane dans ce même flux et/ou de mesure de la pression dans chacun des adsorbeurs,
v. Une étape de comparaison de la mesure prise à l'étape iv avec une valeur cible, et
vi. En cas d'écart entre la mesure prise et la valeur cible une étape de modification de l'écoulement du flux gazeux d'alimentation afin d'obtenir la valeur cible.

7. Procédé selon la revendication 6, **caractérisé en ce que** les étapes i à vi sont réalisées en continu.

8. Procédé selon l'une des revendications 6 ou 7, **caractérisé en ce qu'**à l'étape ii chaque adsorbeur de l'unité d'adsorption va suivre en décalage de phase le cycle de pression comprenant les périodes successives suivantes :
a. Adsorption au cours de laquelle le gaz d'alimentation est introduit par une des extrémités de l'adsorbeur et au moins une partie des COV sont adsorbés par l'adsorbant,
b. Dépressurisation au cours de laquelle l'adsorbeur qui n'est plus alimenté en gaz d'alimentation est évacué par au moins une de ses extrémités d'une partie des COV contenus dans l'adsorbant,
c. Elution au cours de laquelle un gaz de purge circule à travers le lit d'adsorbant afin d'aider à la désorption des COV,
d. Repressurisation au cours de laquelle l'adsorbeur est au moins partiellement repressurisé.

9. Procédé selon la revendication 8, **caractérisé en ce qu'**à l'étape c. le gaz de purge est constitué d'au moins une partie du perméat enrichi en dioxyde de carbone issu de l'unité de séparation par membrane.

10. Procédé selon la revendication 9, **caractérisé en ce que** le gaz de purge sortant de l'unité d'adsorption est brûlé dans un oxidateur thermique à pression atmosphérique ou est envoyé à l'évent de l'installation.

11. Procédé selon l'une des revendications 9 ou 10, **caractérisé en ce que** le perméat enrichi en dioxyde de carbone est envoyé directement à l'évent ou dans un oxidateur thermique lors des périodes pendant lesquelles aucun adsorbeur n'est traversé par ledit perméat.

12. Procédé selon l'une des revendications 8 à 11, **caractérisé en ce que** le cycle de pression comprend une étape de temps mort.

13. Procédé selon l'une des revendications 8 à 12, **caractérisé en ce que** la dépressurisation commence par une dépressurisation à co-courant par équilibrage de pressions avec un autre adsorbeur.

14. Procédé selon l'une des revendications 6 à 13, **caractérisé en ce que** les étapes iv, v et vi sont réalisées automatiquement par des moyens de transmission de données et de traitement de données.

15. Procédé selon l'une des revendications 6 à 14, **caractérisé en ce que** le flux gazeux d'alimentation est du biogaz.
